# EUROPEAN PATENT APPLICATION

(11) **EP 1 710 669 A1**
(43) Date of publication of application: **11.10.2006**
(21) Application number: 06004859.2
(22) Date of filing: 09.03.2006
(51) Int. Cl.: G06F 3/023

(54) **Inputting character into mobile terminal**

(30) Priority: 06.04.2005 KR 2005028673
(71) Applicant: LG Electronics Inc., Yongdungpo-gu Seoul (KR)
(72) Inventor: Han, Ki-Woong, Ansan Gyeonggi-Do (KR)
(74) Representative: Thum, Bernhard

(57) **Abstract**

The present invention is related to easily and rapidly inputting a character into a mobile terminal. Preferably, a first character is inputted into the mobile terminal using a first key associated with at least one allocated alphabetical character. A second character is then inputted by pressing a second key not associated with an allocated alphabetical character, wherein the second key is reserved for inputting the second character according to an alphabetical position of the second character relative to the first character. Accordingly, a user may input a preceding or succeeding character of a previously-inputted character in alphabetical order, re-input the previously-inputted character, or input another character allocated to a key without having to manually move a display cursor or wait for the display cursor to move automatically.

## Description

### FIELD OF THE INVENTION

The present invention relates to a mobile terminal, and more particularly to, easily and rapidly inputting a character into the mobile terminal.

### BACKGROUND OF THE INVENTION

In general, in order to input characters to a mobile terminal, a user must press keys (buttons) of a keypad a number of times according to characters allocated to each key.

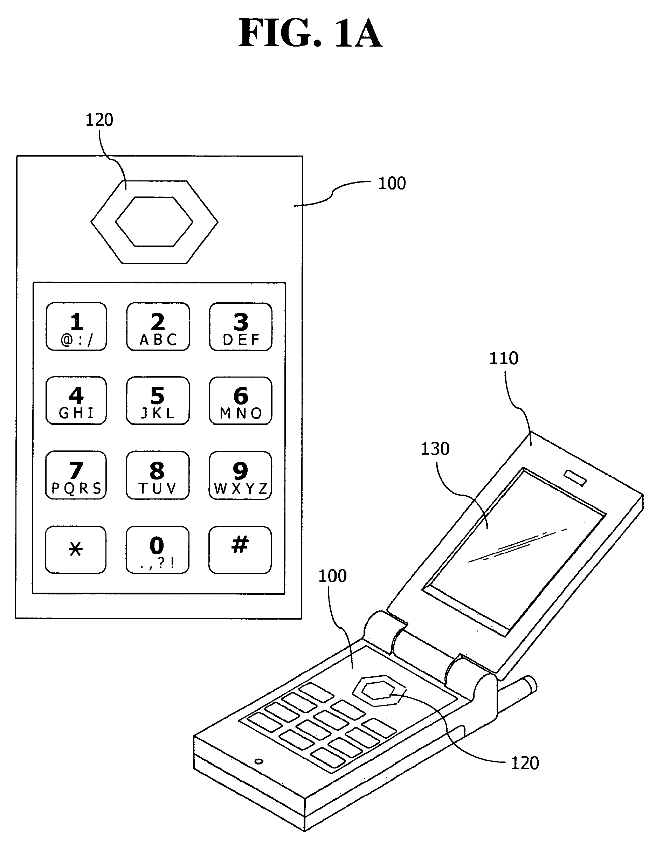

Fig. 1A illustrates a keypad for explaining a related art character input method. Referring to Fig. 1A, a keypad 100 of a mobile terminal 110 comprises keys numbered from 0 to 9, and * and # keys located at opposite sides of the key 0, respectively. The keys may be utilized for inputting characters, such as English letters into the mobile terminal. Accordingly, the letters A, B and C are allocated to the key 2 in order. Thus, the user can input the letter A into the mobile terminal by pressing the key 2 once, the letter B by pressing the key 2 twice, and the letter C by pressing the key 2 three times. In the same manner, the letters D, E and F are allocated to the key 3, the letters G, H and I are allocated to the key 4, the letters J, K and L are allocated to the key 5, the letters M, N and O are allocated to the key 6, the letters P, Q, R and S are allocated to the key 7, the letters T, U and V are allocated to the key 8, and the letters W, X, Y and Z are allocated to the key 9. In addition, special signs and character marks such as "@, : and /" and "., ?, ! and ," are allocated to the keys 1 and 0, respectively.

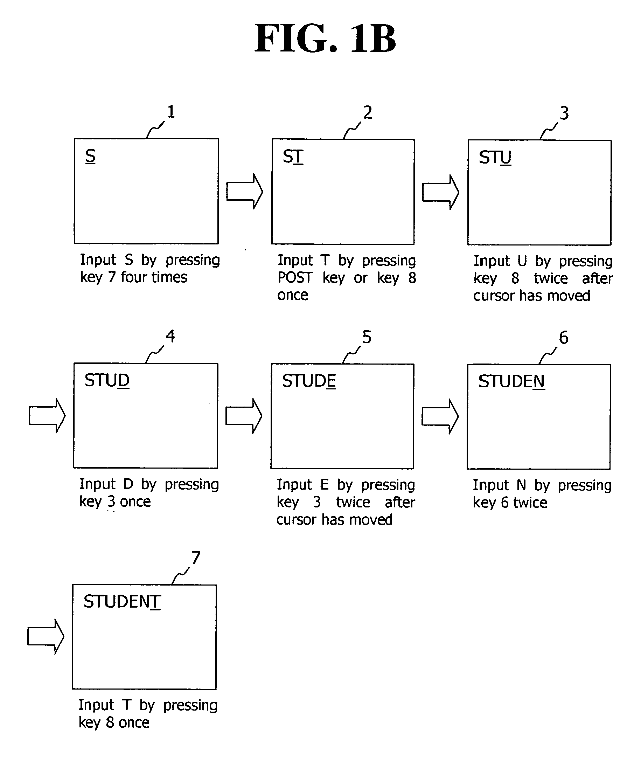

Because the plurality of letters are allocated to each key of the keypad 100, the user must press one key a number of times to input consecutive characters. For example, referring to Figs. 1A and 1B, when the user intends to input the word 'STUDENT' into the mobile terminal, the user inputs the letter S by pressing the key 7 four times (step 1), and inputs the letter T by pressing the key 8 once (step 2). Since the letters T and U are allocated to the key 8, after the user inputs the letter T, the user can press the key 8 once more to input the letter U. However, in practice, in order to input the letters T and U consecutively, the user first inputs the letter T, waits for a period of time such as one second, and then presses the key 8 twice when a cursor on a display 130 of the mobile terminal moves to the right side of the letter T. Otherwise, the user may move the cursor to the right side of the letter T by pressing a direction key 120 on the keypad 100, and then press the key 8 twice (step 3).

After inputting the letter U, the user inputs the letter D by pressing the key 3 once (step 4). Then, however, because the letter E and the letter D are both allocated to the key 3, the user must wait a period of time after inputting the letter D for a cursor on the display to move to the right of the D before pressing the key 3 twice to input the letter E. Otherwise, the user may move the cursor to the right by pressing a direction key 120 on the keypad 100 and then press the key 3 twice to input the letter E (step 5). After, the user inputs the letter N by pressing the key 6 twice (step 6), and inputs the letter T by pressing the key 8 once (step 7), thereby finishing input of the word 'STUDENT'.

As described above, in the related art character input method, the user must wait a period of time or alternatively press a direction key to properly position a cursor of the display prior to inputting consecutive characters allocated to the same key. Thus, the related art character input method is inefficient because a message writing time is increased.

### SUMMARY OF THE INVENTION

The present invention is directed to easily and rapidly inputting a character into a mobile terminal.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a method for inputting a character into a mobile terminal, the method comprising inputting a first character using a first key associated with at least one allocated alphabetical character, and inputting a second character by pressing a second key not associated with an allocated alphabetical character, wherein the second key is reserved for inputting the second character according to an alphabetical position of the second character relative to the first character.

In one aspect of the invention, the step of pressing the second key causes a cursor of a display to move to a next position. In another aspect of the invention, consecutively pressing the second key causes the cursor to remain at a position next to the first character. In a further aspect of the invention, consecutively pressing the second key causes the cursor to continuously move to a next position.

The second key may be a key located at a side of the mobile terminal. Preferably, the second key is any one of a reverse direction key, a forward direction key and a repeat key.

In one aspect of the invention, pressing the reverse direction key inputs a character preceding the first character in alphabetical order. Preferably, when the reverse direction key is pressed n number of times, the reverse direction key inputs an nth character preceding the first character in alphabetical order. Preferably, the reverse direction key is a * key.

In another aspect of the invention, pressing the forward direction key inputs a character succeeding the first character in alphabetical order. Preferably, when the forward direction key is pressed n number of times, the forward direction key inputs an nth character succeeding the first character in alphabetical order. Preferably, the forward direction key is a # key.

In a further aspect of the invention, pressing the repeat key re-inputs the first character.

In accordance with another embodiment of the present invention, a method for inputting a character into a mobile terminal comprises pressing a reverse direction key a predetermined number of times according to a predetermined position of a character to be inputted relative to a previously-inputted character when the character to be inputted precedes the previously-inputted character in a predetermined order, and pressing a forward direction key a predetermined number of times according to a predetermined position of the character to be inputted relative to the previously-inputted character when the character to be inputted succeeds the previously-inputted character in a predetermined order. Preferably, the method further comprises pressing a repeat key when the character to be inputted is identical to the previously-inputted character. Preferably, the predetermined order is an alphabetical order.

Preferably, the reverse direction key is a PRE key allocated to a * key on the mobile terminal. Preferably, the forward direction key is a POST key allocated to a # key on the mobile terminal.

In one aspect of the invention, the method further comprises pressing the reverse direction key n number of times when the character to be inputted is an nth character preceding the previously-inputted character in the predetermined order, and pressing the forward direction key n number of times when the character to be inputted is an nth character succeeding the previously-inputted character in the predetermined order.

In accordance with another embodiment of the present invention, a mobile terminal for inputting a character comprises a reverse direction key for inputting a character preceding a previously-inputted character in a predetermined order, wherein the reverse direction key is pressed a predetermined number of times according to a predetermined position of the character relative to the previously-inputted character, and a forward direction key for inputting a character succeeding the previously-inputted character in the predetermined order, wherein the forward direction key is pressed a predetermined number of times according to a predetermined position of the character relative to the previously-inputted character. Preferably, the method further comprises a repeat key for inputting a character identical to the previously-inputted character. Preferably, the predetermined order is an alphabetical order.

Preferably, the reverse direction key is a PRE key allocated to a * key on the mobile terminal. Preferably, the forward direction key is a POST key allocated to a # key on the mobile terminal.

In one aspect of the invention, the reverse direction key is pressed n number of times when the character is an nth character preceding the previously-inputted character in the predetermined order, and the forward direction key is pressed n number of times when the character is an nth character succeeding the previously-inputted character in the predetermined order.

In accordance with another embodiment of the present invention, a mobile terminal for inputting a character comprises a first key associated with at least one allocated alphabetical character for inputting a first character, and a second key not associated with an allocated alphabetical character for inputting a second character according to an alphabetical position of the second character relative to the first character.

In one aspect of the invention, pressing the second key causes a cursor of a display to move to a next position. In another aspect of the invention, consecutively pressing the second key causes the cursor to remain at a position next to the first character. In a further aspect of the invention, consecutively pressing the second key causes the cursor to continuously move to a next position.

The second key may be a key located at a side of the mobile terminal. Preferably, the second key is any one of a reverse direction key, a forward direction key and a repeat key.

In one aspect of the invention, the reverse direction key inputs a character preceding the first character in alphabetical order. Preferably, when the reverse direction key is pressed n number of times, the reverse direction key inputs an nth character preceding the first character in alphabetical order. Preferably, the reverse direction key is a * key.

In another aspect of the invention, the forward direction key inputs a character succeeding the first character in alphabetical order. Preferably, when the forward direction key is pressed n number of times, the forward direction key inputs an nth character succeeding the first character in alphabetical order. Preferably, the forward direction key is a # key.

In a further aspect of the invention, the repeat key re-inputs the first character.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
Fig. 1A illustrates a keypad for explaining a related art character input method.
Fig. 1 B illustrates a related art character input method.
Fig. 2A illustrates a keypad for explaining a character input method in accordance with one embodiment of the present invention.
Fig. 2B illustrates a method for correcting a character input in accordance with one embodiment of the present invention.
Figs. 3A to 3C illustrate display screens for inputting characters in accordance with preferred embodiments of the present invention.

### DETAILED DESCRIPTION OF THE PREFERRED EMBODIMENTS

The present invention relates to easily and rapidly inputting a character into a mobile terminal.

Reference will now be made in detail to the preferred embodiments of the present invention, examples of which are illustrated in the accompanying drawings.

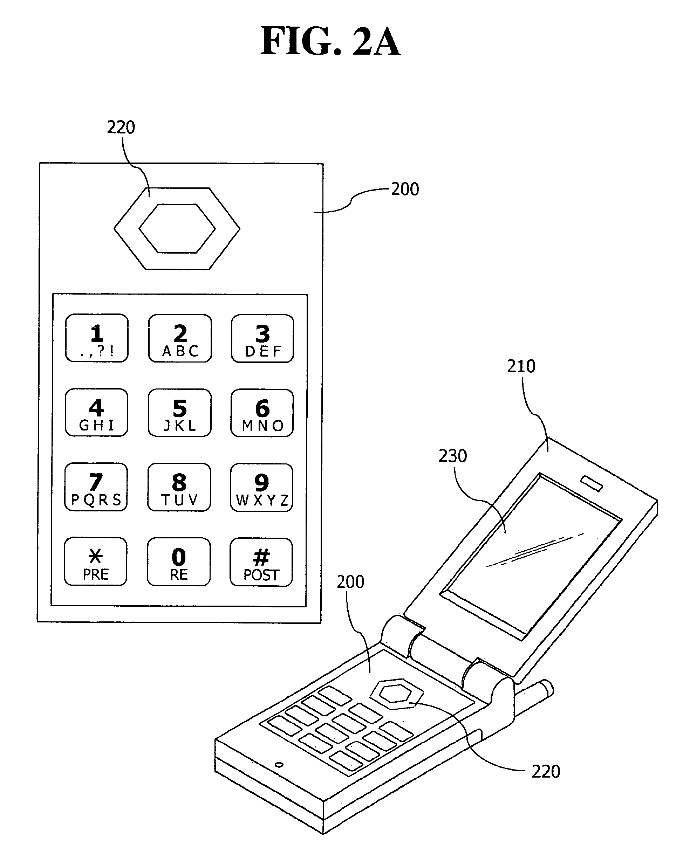

Fig. 2A illustrates a keypad for explaining a character input method in accordance with a preferred embodiment of the present invention. As shown in Fig. 2A, a keypad 200 of a mobile terminal 210 comprises keys numbered from 0 to 9. * and # keys are located at opposite sides of the key 0, respectively. The keys may be utilized for inputting characters, such as English letters into a mobile terminal. Accordingly, the letters A, B and C are allocated to the key 2 in order, the letters D, E and F are allocated to the key 3 in order, the letters G, H and I are allocated to the key 4 in order, the letters J, K and L are allocated to the key 5 in order, the letters M, N and O are allocated to the key 6 in order, the letters P, Q, R and S are allocated to the key 7 in order, the letters T, U and V are allocated to key 8 in order, and the letters W, X, Y and Z are allocated to the key 9 in order. In addition, character marks such as "., ?, ! and ," are allocated to the key 1.

Here, the allocation of English letters and character marks of the keypad 200 is one example of an allocation scheme in accordance with an embodiment of the present invention, and is not intended to be limiting. Thus, different types of letters and character marks may be allocated to each number key according to various other allocation schemes.

Preferably, for inputting an English letter, when the letter A is allocated to the key 2, the letter E is allocated to the key 3, the letter H is allocated to the key 4, the letter L is allocated to the key 5, the letter O is allocated to the key 6, the letter S is allocated to the key 7, the letter V is allocated to the key 8, the letter Y is allocated to the key 9 and various character marks or special signs are allocated to the key 1, the following methods can be applied by those skilled in the art to which the present invention pertains.

Furthermore, the keypad 200 comprises a previous character re-input key (RE key) preferably allocated to the key 0, a reverse direction key (PRE key) preferably allocated to the * key, and a forward direction key (POST key) preferably allocated to the # key. However, it is contemplated that the RE, PRE, and POST keys may be allocated to any key not associated with an alphabetical character.

The RE key serves to re-input a previously-inputted character or a character indicated by a cursor. Preferably, if the RE key is consecutively pressed, the cursor will continuously move one position to the right of each character inputted using the RE key.

The PRE key serves to input a character adjacent to the previously-inputted character in reverse alphabetical order. Accordingly, when the user presses the PRE key n times (n=1, 2, ..., n), he/she can input the nth preceding character of the previously-inputted character in alphabetical order. Preferably, if the PRE key is consecutively pressed, the cursor will remain at a position to the right of the previously-inputted character.

The POST key serves to input a character adjacent to the previously-inputted character in forward alphabetical order. Thus, when the user presses the POST key n times, he/she can input the nth succeeding character of the previously-inputted character in alphabetical order. Preferably, if the POST key is consecutively pressed, the cursor will remain at a position to the right of the previously-inputted character.

For example, when the user inputs the letter K and presses the PRE key, he/she can input the letter J. Alternatively, when the user inputs the letter K and presses the POST key, he/she can input the letter L. When the user inputs the letter K and presses the RE key, he/she can re-input the letter K.

In addition, when the user inputs the letter P and presses the PRE key twice, he/she can input the letter N. When the user inputs the letter P and presses the POST key three times, he/she can input the letter S. Preferably, when the user inputs the letter P and presses the PRE key once, he/she can input the letter O, which is the character adjacent to the letter P in reverse alphabetical order. When the user presses the PRE key again, he/she can input the letter N, which is the character adjacent to the letter O in reverse alphabetical order.

In the case of the letter S, the letter is acquired by moving in the forward direction from the letter P; however, the operational principle is the same as acquiring the letter N from the letter P in the reverse direction. Preferably, when the user inputs the letter P and presses the POST key once, he/she can input the letter Q, which is the character adjacent to the letter P in forward alphabetical order. When the user presses the POST key again, he/she can input the letter R, which is the character adjacent to the letter Q in forward alphabetical order. When the user presses the POST key once more, he/she can input the letter S, which is the character adjacent to the letter R in forward alphabetical order.

Preferably, the maximum number of characters allocated to one key (or button) of the keypad 200 is generally four. Therefore, the value of n is preferably equal to or smaller than three. Here, the cursor of a display 230 is located on the currently-inputted character. The user may input the preceding or succeeding character of the currently-inputted character by using the PRE or POST key.

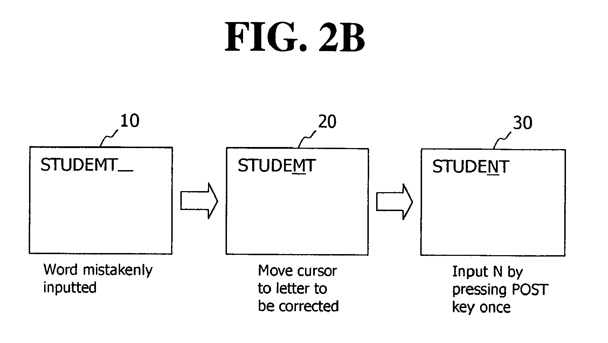

In accordance with one embodiment of the present invention, when the user intends to make corrections to inputted characters during or after character input, the user may do so by moving the cursor and using at least one of the RE, PRE and POST keys. For example, referring to Figs. 2A and 2B, when the user wishing to input the word 'STUDENT' mistakenly inputs the letters 'STUDEMT' (step 10), he/she may move the cursor twice in the reverse direction (to the left side) using a direction key 220 (step 20). Accordingly, the cursor will be located on the letter 'M'. The user may then press the POST key once to input the letter N, which is the character adjacent to the letter M in forward alphabetical order (step,30).

In one aspect of the present invention, the cursor may be located after the currently-inputted character. In order to input a target character, the user may input the character that is most adjacent to the target character, and press the PRE or POST key accordingly. Preferably, the user may decide the location of the cursor according to the inputted word or sentence.

In another aspect of the present invention, a character succeeding the currently-inputted character is estimated by an automatic word completion function, such as a predictive-text function, wherein the cursor is automatically located on the character that is most adjacent to the estimated character in the forward or reverse direction. Accordingly, the user may rapidly input characters using the automatic word completion function and the PRE or POST keys, without having to press the keys of the keypad 200 more times than necessary. Preferably, the automatic word completion function is applicable to words and phrases.

In accordance with one embodiment of the present invention, when the user inputs characters using the keypad, if the character to be inputted is the character adjacent to the previously-inputted character in forward or reverse alphabetical order or if the character to be inputted is identical to the previously-inputted character, the user may press the PRE key, the POST key or the RE key without having to wait for the cursor to move or having to move the cursor manually.

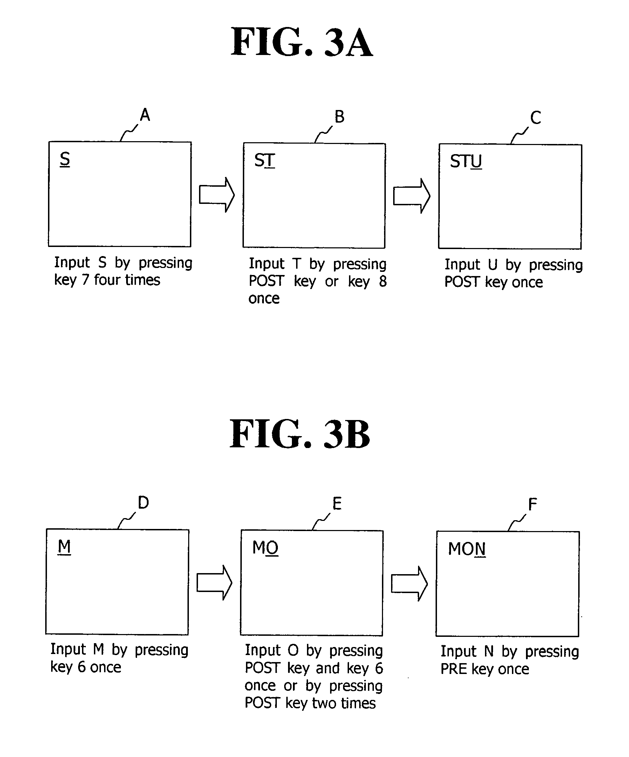

Figs. 3A to 3C illustrate display screens for inputting characters in accordance with preferred embodiments of the present invention.

Referring to Fig. 3A, a method for inputting the letters STU, which are the first three characters of the word 'STUDENT', will be described. In accordance with one embodiment of the present invention, the user may input the letter S by pressing the key 7 four times (step A). To input the letter T, the user may press the key 8 to which the letter T has been allocated, or press the # key (POST key) to input the character adjacent to the previously-inputted letter S in forward alphabetical order (step B). To input the letter U, the user may press the # key (POST key) once (step C) in order to input the character adjacent to the previously-inputted letter T in forward alphabetical order.

Previously, in the conventional art, in order to input the letter U, the user must first input the letter T by pressing the key 8, wait for the cursor to automatically move to the right of the letter T or manually move the cursor by pressing the direction key, and then press the key 8 again. As described above, in accordance with the present invention, because the character U is adjacent to the previously-inputted character T in forward alphabetical order, the user can easily input the character U by inputting the letter T and then pressing the # key (POST key). Accordingly, the present invention is advantageous over the conventional art because the user saves time by not having to wait for the cursor to move to the right or manually move the cursor using the direction key prior to inputting the next desired character.

Referring to Fig. 3B, a method for inputting the letters MON, which are the first three characters of the word 'MONEY', will be described. In accordance with one embodiment of the present invention, the user may input the letter M by pressing the key 6 once (step D). Thereafter, the user may input the letter O by pressing the # key (POST key) once and then the key 6 once (step E). Alternatively, the user may also input the letter O by pressing the # key (POST key) two times. Specifically, when the user inputs the letter M and then presses the # key once, he/she can input the letter N, which is the character adjacent to the previously-inputted character M in forward alphabetical order. Then, when the user subsequently presses the key 6 or the # key (POST key) again, he/she can input the letter O because M, N and O have been allocated to the key 6 in alphabetical order. After the user inputs the letter O, the user may press the * key (PRE key) once to input the letter N, which is the character adjacent to the previously inputted letter O in reverse alphabetical order (step F).

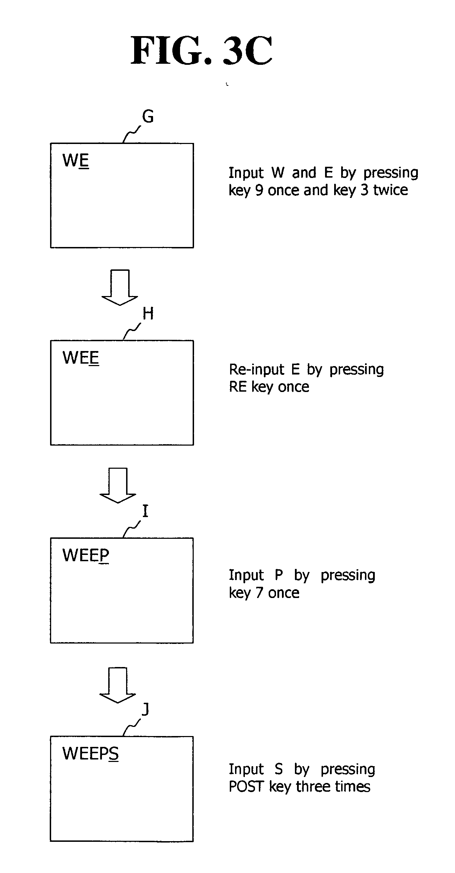

Referring to Fig. 3C, a method for inputting the word 'WEEPS' will be described. In accordance with one embodiment of the present invention, the user may input the letter W by pressing the key 9 once, input the letter E by pressing the key 3 twice (step G), and re-input the letter E by pressing the key 0 (RE key) once (step H). After the user inputs the letter E, the user may press the key 7 once to input the letter P (step I). Thereafter, the user may press the # key (POST key) three times to input the letter S, which is the third adjacent character of the previously-inputted letter P in forward alphabetical order (step J).

As discussed earlier, in accordance with the present invention, a character input method using a special key allows a user to input a preceding or succeeding character of consecutive characters in alphabetical order. The user may also re-input a previously-inputted character. Thus, when the user intends to input a consecutive character in alphabetical order, another character allocated to one key, or re-input a previously-inputted character, the user may input the character without manually moving the cursor or waiting for the cursor to move automatically. As a result, the user may easily and rapidly input characters into a device.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for inputting a character into a mobile terminal, the method comprising:
inputting a first character using a first key associated with at least one allocated alphabetical character; and
inputting a second character by pressing a second key not associated with an allocated alphabetical character, wherein the second key is reserved for inputting the second character according to an alphabetical position of the second character relative to the first character.

2. The method of claim 1, wherein the step of pressing the second key causes a cursor of a display to move to a next position.

3. The method of claim 2, wherein consecutively pressing the second key causes the cursor to remain at a position next to the first character.

4. The method of claim 2, wherein consecutively pressing the second key causes the cursor to continuously move to a next position.

5. The method of claim 1, wherein the second key is a key located at a side of the mobile terminal.

6. The method of claim 1, wherein the second key is any one of a reverse direction key, a forward direction key and a repeat key.

7. The method of claim 6, wherein pressing the reverse direction key inputs a character preceding the first character in alphabetical order.

8. The method of claim 7, wherein, when the reverse direction key is pressed n number of times, the reverse direction key inputs an nth character preceding the first character in alphabetical order.

9. The method of claim 6, wherein the reverse direction key is a * key.

10. The method of claim 6, wherein pressing the forward direction key inputs a character succeeding the first character in alphabetical order.

11. The method of claim 10, wherein, when the forward direction key is pressed n number of times, the forward direction key inputs an nth character succeeding the first character in alphabetical order.

12. The method of claim 6, wherein the forward direction key is a # key.

13. The method of claim 6, wherein pressing the repeat key re-inputs the first character.

14. A method for inputting a character into a mobile terminal, the method comprising:
pressing a reverse direction key a predetermined number of times according to a predetermined position of a character to be inputted relative to a previously-inputted character when the character to be inputted precedes the previously-inputted character in a predetermined order; and
pressing a forward direction key a predetermined number of times according to a predetermined position of the character to be inputted relative to the previously-inputted character when the character to be inputted succeeds the previously-inputted character in a predetermined order.

15. The method of claim 14, further comprising pressing a repeat key when the character to be inputted is identical to the previously-inputted character.

16. The method of claim 14, wherein the predetermined order is an alphabetical order.

17. The method of claim 14, wherein the reverse direction key is a PRE key allocated to a * key on the mobile terminal.

18. The method of claim 14, wherein the forward direction key is a POST key allocated to a # key on the mobile terminal.

19. The method of claim 14, further comprising:
pressing the reverse direction key n number of times when the character to be inputted is an nth character preceding the previously-inputted character in the predetermined order; and
pressing the forward direction key n number of times when the character to be inputted is an nth character succeeding the previously-inputted character in the predetermined order.

20. A mobile terminal for inputting a character, the mobile terminal comprising:
a reverse direction key for inputting a character preceding a previously-inputted character in a predetermined order, wherein the reverse direction key is pressed a predetermined number of times according to a predetermined position of the character relative to the previously-inputted character; and
a forward direction key for inputting a character succeeding the previously-inputted character in the predetermined order, wherein the forward direction key is pressed a predetermined number of times according to a predetermined position of the character relative to the previously-inputted character.

21. The mobile terminal of claim 20, further comprising a repeat key for inputting a character identical to the previously-inputted character.

22. The mobile terminal of claim 20, wherein the predetermined order is an alphabetical order.

23. The mobile terminal of claim 20, wherein the reverse direction key is a PRE key allocated to a * key on the mobile terminal.

24. The mobile terminal of claim 20, wherein the forward direction key is a POST key allocated to a # key on the mobile terminal.

25. The mobile terminal of claim 20, wherein:
the reverse direction key is pressed n number of times when the character is an nth character preceding the previously-inputted character in the predetermined order; and
the forward direction key is pressed n number of times when the character is an nth character succeeding the previously-inputted character in the predetermined order.

26. A mobile terminal for inputting a character, the mobile terminal comprising:
a first key associated with at least one allocated alphabetical character for inputting a first character; and
a second key not associated with an allocated alphabetical character for inputting a second character according to an alphabetical position of the second character relative to the first character.

27. The mobile terminal of claim 26, wherein pressing the second key causes a cursor of a display to move to a next position.

28. The mobile terminal of claim 27, wherein consecutively pressing the second key causes the cursor to remain at a position next to the first character.

29. The mobile terminal of claim 27, wherein consecutively pressing the second key causes the cursor to continuously move to a next position.

30. The mobile terminal of claim 26, wherein the second key is a key located at a side of the mobile terminal.

31. The mobile terminal of claim 26, wherein the second key is any one of a reverse direction key, a forward direction key and a repeat key.

32. The mobile terminal of claim 31, wherein the reverse direction key inputs a character preceding the first character in alphabetical order.

33. The mobile terminal of claim 32, wherein, when the reverse direction key is pressed n number of times, the reverse direction key inputs an nth character preceding the first character in alphabetical order.

34. The mobile terminal of claim 31, wherein the reverse direction key is a * key.

35. The mobile terminal of claim 31, wherein the forward direction key inputs a character succeeding the first character in alphabetical order.

36. The mobile terminal of claim 35, wherein, when the forward direction key is pressed n number of times, the forward direction key inputs an nth character succeeding the first character in alphabetical order.

37. The mobile terminal of claim 31, wherein the forward direction key is a # key.

38. The mobile terminal of claim 31, wherein the repeat key re-inputs the first character.
